# EUROPÄISCHE PATENTANMELDUNG

(11) **EP 4 459 202 A1**
(43) Veröffentlichungstag der Anmeldung: **06.11.2024**
(21) Anmeldenummer: 23171872.7
(22) Anmeldetag: 05.05.2023
(51) Int. Cl.: F24S 25/30, F24S 25/65, H02S 20/24

(54) **BALLASTIERUNGSSYSTEM**

(71) Anmelder: Ernst Schweizer AG, 8908 Hedingen (CH)
(72) Erfinder: WERMUTH, Simon, 8805 Richterswil (CH); WEISS, Hanspeter, 5622 Waltenschwil (CH)
(74) Vertreter: Frischknecht, Harry Ralph

(57) **Zusammenfassung**

Ein Ballastierungssystem (B) für ein Lagersystem für die Bereitstellung einer Ballastierung von solartechnischen Energieerzeugungselementen, umfasst
mindestens zwei in einem Abstand (Z) beabstandet zueinander liegende Grundprofile (1),
mindestens eine Ballastprofilanordnung (2) mit jeweils zwei in einem Abstand (X) beabstandet zueinander liegenden Ballastprofilen (3), und
mehrere Verbindungselemente (4),
wobei sich die Grundprofile (1) entlang einer Grundprofilachse (A1) und die Ballastprofile (3) entlang einer Ballastprofileachse (A3) erstrecken, wobei die Grundprofilachsen (A1) jeweils winklig geneigt, insbesondere in einem rechten Winkel, zu den Ballastprofileachsen (A3) verlaufen,
dadurch gekennzeichnet,
dass mindestens eines der genannten Verbindungselemente (4) mit den beiden Ballastprofilen (3) über eine Verbindung einer ersten Art verbunden ist, derart, dass die Ballastprofile (3) bezüglich ihrer Lage zueinander durch das Verbindungselement (4) festgelegt sind, und
dass mindestens eines der Ballastprofile (2) zu einem der Grundprofile (1) mit einer weiteren Verbindung verbunden ist, derart, dass das mindestens eine Ballastprofil (2) in eine Richtung parallel zur Ballastprofilachse (A3) und vorzugsweise in eine Richtung quer zur Grundprofilachse (A1) zum mindestens einen Grundprofil (1) festgelegt ist.

## Beschreibung

### TECHNISCHES GEBIET

Die vorliegende Erfindung betrifft ein Ballastierungssystem für ein Lagersystem für die Bereitstellung einer Ballastierung von solartechnischen Energieerzeugungselementen nach Anspruch 1, ein Lagersystem für die Lagerung von solartechnischen Energieerzeugungselementen nach Anspruch 12 und ein Verbindungselement nach Anspruch 14.

### STAND DER TECHNIK

Aus dem Stand der Technik sind Ballastierungssysteme für solartechnische Energieerzeugungselemente, wie Photovoltaikmodule oder thermische Solarpanels, bekannt.

Beispielsweise offenbart die US 2014/130849 ein derartiges Ballastierungssystem, bei welchem Ballastelemente in einen aus Profilen gebildeten Rahmen einlegbar sind.

Die EP 3 865 784 offenbart ein weiteres Ballastierungssystem, bei welchem Ballastelemente in einen Zwischenraum zwischen zwei Profilen einlegbar sind.

### DARSTELLUNG DER ERFINDUNG

Der vorliegenden Erfindung liegt eine Aufgabe zugrunde, ein Ballastierungssystem für die Bereitstellung einer Ballastierung von solartechnischen Energieerzeugungselementen, anzugeben, welches eine effizient bereitzustellende Ballastierung erlaubt.

Diese Aufgabe löst der Gegenstand nach Anspruch 1. Demgemäss umfasst ein Ballastierungssystem für die Bereitstellung einer Ballastierung von solartechnischen Energieerzeugungselementen, mindestens zwei in einem Abstand beabstandet zueinander liegende Grundprofile, mindestens eine Ballastprofilanordnung mit jeweils zwei in einem Abstand beabstandet zueinander liegenden Ballastprofilen, und mehrere Verbindungselemente. Die Grundprofile erstrecken sich entlang einer Grundprofilachse und die Ballastprofile erstrecken sich entlang einer Ballastprofilachse. Im montierten Zustand verlaufen die Grundprofilachsen winklig geneigt, insbesondere in einem rechten Winkel, zu den Ballastprofileachsen. Die Grundprofilachsen von den Grundprofilen verlaufen jeweils parallel zueinander und die Ballastprofilachsen von den Ballastprofilen verlaufen ebenfalls parallel zueinander.

Mindestens eines der genannten Verbindungselemente ist mit den beiden Ballastprofilen über eine Verbindung einer ersten Art derart verbunden, derart, dass die beiden Ballastprofile bezüglich ihrer Lage zueinander durch das Verbindungselement festgelegt sind. Hierdurch wird sichergestellt, dass der Abstand zwischen den Ballastprofilen über die gesamte Länge des Ballastprofils im Wesentlichen konstant bleibt und so eine gute Auflage für die Ballastierungselemente geschaffen werden kann.

Mindestens eines der Ballastprofile ist zu einem der Grundprofile mit einer weiteren Verbindung verbunden, derart, dass das mindestens eine Ballastprofil in eine Richtung parallel zur Ballastprofilachse und vorzugsweise in eine Richtung quer zur Grundprofilachse zum mindestens einen Grundprofil festgelegt ist.

Durch die Verbindung der beiden Ballastprofile über das Verbindungselement und die Verbindung zwischen dem mindestens einen Ballastprofil und dem Grundprofil kann eine einfache Struktur für die Ballastierung bereitgestellt werden.

In einer ersten Ausführungsform wird die weitere Verbindung zwischen dem mindestens einen Ballastprofil und dem Grundprofil durch ein weiteres der genannten Verbindungselemente bereitgestellt. Das weitere der genannten Verbindungselemente ist an mindestens einer Stelle, bei welcher die Ballastprofile auf dem Grundprofil aufliegen, angeordnet. Das besagte weitere Verbindungselement ist mit den beiden Ballastprofilen über die Verbindung der ersten Art derart verbunden, dass die Ballastprofile bezüglich ihrer Lage zueinander durch das Verbindungselement festgelegt sind. Weiter sind mit dem besagten weiteren Verbindungselement die Ballastprofile zum Grundprofil mit einer Verbindung einer zweiten Art derart verbunden, dass die Ballastprofile mindestens gegen eine Bewegung in Richtung der Ballastprofileachse zum Grundprofil festgelegt sind.

Durch den Einsatz von gleichen Verbindungselementen zur Verbindung der Ballastprofile untereinander und zur Verbindung der Ballastprofile untereinander und zum Grundprofil ergeht der Vorteil, dass System geschaffen wird, welches einfach bereitstellbar ist. Insbesondere kann ein Installateur das Verbindungselement identisch bzw. gleichartig an verschiedenen Orten einsetzen, was die Montage einerseits vereinfacht und andererseits weniger fehleranfällig macht.

Vorzugsweise wird die beschriebene Verbindung der beiden Ballastprofile über die erste Art miteinander und der beiden Ballastprofile über die besagte zweite Art mit dem Grundprofil nur an einem Endbereich der Ballastprofile vorgesehen. Das andere Ende der Ballastprofile liegt vorzugsweise lediglich auf einer Platte oder auf dem Grundprofil deoder auf einem vorhergehenden Ballastprofil auf.

Vorzugsweise ist die Verbindung der zweiten Art zwischen dem Verbindungselement und dem Grundprofil derart, dass eine Bewegung zwischen dem Verbindungselement und dem Grundprofil in Richtung der Grundprofilachse mindestens gehemmt oder kraftschlüssig festgelegt ist und dass eine Bewegung quer zur Grundprofilachse und in Richtung der Ballastprofilachse verunmöglicht wird. Somit können Längenänderung des Grundprofils, beispielsweise aufgrund von Wärmeeinstrahlung, ausgeglichen werden, ohne, dass es zu einer Verschiebung der Ballastprofile kommt. Unter mindestens gehemmt wird verstanden, dass leichte Verschiebungen durch Einwirkung von grösseren Kräften möglich sind. Unter kraftschlüssig festgelegt wird verstanden, dass durch das Gewicht der Ballastierungselemente ein fester Kraftschluss zwischen dem Verbindungselement und dem Grundprofil bereitgestellt wird.

Vorzugsweise sind die besagten Verbindungselemente identisch zueinander ausgebildet. Das heisst, alle Verbindungselemente nach der ersten Ausführungsform sind identisch bzw. gleich zueinander ausgebildet.

In einer zweiten Ausführungsform wird die weitere Verbindung durch mindestens ein Befestigungselement, wie eine Schraube oder eine Niete, bereitgestellt. Das genannte mindestens eine Ballastprofil wird durch das Befestigungselement direkt oder indirekt mit dem Grundprofil verbunden. Bei der direkten Verbindung verbindet das mindestens eine Befestigungselement das Ballastprofil direkt mit dem Grundprofil. Bei der indirekten Verbindung verbindet das mindestens eine Befestigungselement das Ballastprofil über ein weiteres Element. Beispielsweise über den unten genannten Lagerbock. Bei der indirekten Verbindung steht das Ballastprofil fest mit dem weiteren Element in Verbindung und das Grundprofil steht fest mit dem weiteren Element in Verbindung.

In der Folge werden bevorzugte Merkmale für beide Ausführungsformen erläutert.

Je nach Länge der Ballastprofile können mehrere Verbindungselemente angeordnet werden.

Vorzugsweise ist die Verbindung zwischen dem Verbindungselement und dem jeweiligen Ballastprofil fest, so dass das Verbindungselement zum Ballastprofil festgelegt ist, insbesondere, dass das Verbindungselement zum Ballastprofil in Richtung der Ballastprofilachse, in eine Richtung quer zur Ballastprofilachse und rechtwinklig zur Grundprofilachse und in eine Richtung quer zur Ballastprofilachse und parallel zur Grundprofilachse festgelegt ist. Es wird also eine starre Verbindung bereitgestellt, so dass die beiden Ballastprofile der Ballastprofilanordnung sich nicht relativ zueinander verschieben können.

Vorzugsweise weist jedes der Ballastprofile eine Auflagefläche auf, auf welcher Ballastierungselemente auflegbar sind.

Die Auflageflächen erstrecken sich in den Zwischenraum zwischen den beiden Ballastprofilen und die Ballastierungselemente können in diesen Zwischenraum eingelegt werden. Der Abstand zwischen den Ballastprofilen ist dabei derart, dass sich die Ballastprofile nicht berühren, das heisst zwischen den Auflageflächen liegt ein freier Zwischenraum.

Die Auflagefläche ist ein Teil des Ballastprofils und erstreckt sich vorzugsweise über die gesamte Länge des Ballastprofils.

In der ersten Ausführungsform liegt die Auflagefläche im montierten Zustand in der Horizontalen, das heisst rechtwinklig zur Lotrichtung. In der zweiten Ausführungsform liegt die Auflagefläche im montierten Zustand in einem Winkel winklig geneigt zur Horizontalen, das heisst in einem Winkel winklig zur Lotrichtung geneigt.

In der ersten Ausführungsform weist jedes der Ballastprofile einen trapezförmigen Querschnitt auf, wobei eine Trapezseite offen ausgebildet ist, und wobei beidseitig vom trapezförmigen Querschnitt je eine Auflagefläche abragt. In der zweiten Ausführungsform weist eines der Ballastprofile den genannten trapezförmigen Querschnitt auf und das andere der Ballastprofile weist einen anderen Querschnitt auf.

Alle Auflageflächen liegen in Einbaulage im Wesentlichen in der gleichen Ebene. In der ersten Ausführungsform liegen die Auflageflächen in der Horizontalen und in der zweiten Ausführungsform liegen die Auflageflächen im genannten Winkel winklig geneigt zur Horizontalen.

Vorzugsweise ist der trapezförmige Querschnitt nach unten hin offen ausgebildet. Die Oberseite des trapezförmigen Querschnitts ist geschlossen ausgebildet. Die Oberseite des trapezförmigen Querschnitts ist schmaler ausgebildet als die Unterseite des trapezförmigen Querschnitts. Die Seitenflächen des trapezförmigen Querschnitts verlaufen demnach von der Oberseite gesehen derart, dass der Abstand zwischen den Seitenflächen mit zunehmendem Abstand von der Oberseite weg, zunimmt. Die lichte Weite des Zwischenraums zwischen zwei benachbarten Ballastprofilen nimmt somit von oben her gesehen mit zunehmendem Abstand von der Oberseite des Ballastprofils weg, ab, was den Vorteil aufweist, dass eine Führung für ein einzusetzendes Ballastelement bereitgestellt werden kann.

Vorzugsweise weisen die Ballastprofile gemäss allen Ausführungsformen mehrere Öffnungen auf, in welche das Verbindungselement mit einem Sicherungsabschnitt einragt, wobei dadurch die Verbindung zwischen dem Ballastprofil und dem Verbindungselement bereitgestellt wird.

Vorzugsweise sind die besagten Öffnungen schlitzförmig. Die schlitzförmige Öffnung ist so orientiert, dass die Ausdehnung der schlitzförmigen Öffnung in Richtung der Ballastprofilachse grösser ist als in Richtung quer zur Ballastprofilachse.

Vorzugsweise sind die Öffnungen in der Auflagefläche angeordnet. Vorzugsweise wird das Verbindungselement mit dem genannten Verbindungsabschnitt von oben her in die Öffnung eingesetzt und liegt teilweise auf der Auflagefläche auf. Das Verbindungselement ist dabei vorzugsweise so ausgebildet, dass im montierten Zustand der Überstand über die Auflagefläche möglichst gering ist. Vorzugsweise ist der Überstand maximal 0.4 bis 0.8 Millimeter.

Vorzugsweise liegt in Richtung der Ballastprofilachse der Abstand zwischen zwei Verbindungselementen im Bereich von 50 bis 150 Zentimetern, insbesondere im Bereich von 60 bis 140 Zentimetern. In den Endbereichen der Ballastprofile kann der Abstand kürzer sein, beispielsweise zwischen 9 und 12 Zentimetern, insbesondere zwischen 10 und 11 Zentimetern.

Vorzugsweise ist der Abstand zwischen den Ballastprofilachsen von zwei benachbarten Ballastprofilen im Bereich von 17 bis 30 Zentimetern, insbesondere im Bereich von 19.5 bis 27.5 Zentimetern, liegt.

Vorzugsweise stehen die Ballastprofile vom Grundprofil mit einem überstehenden Ende ab bzw. ragen mit dem überstehenden Ende quer zur Grundprofilachse über des Grundprofils hinweg. Im Bereich der überstehenden Enden der Ballastprofile ist jeweils ein weiteres Ballastprofil und ein weiteres Grundprofil anordbar. Vorzugsweise liegt das weitere Ballastprofil auf dem genannten Ballastprofil auf. Bevorzugt wird dadurch die Festlegung in der Grundprofilachse der Ballastprofilanordnung übernommen.

Vorzugsweise liegt das weitere Ballastprofil auf dem genannten Ballastprofil derart auf, dass zwischen den beiden Ballastprofilen eine Relativverschiebung in Richtung der Ballastprofilachse ermöglicht wird.

Das weitere Ballastprofil ist vorzugsweise derart angeordnet, dass dieses das Ballastprofil teilweise überstülpt.

Ein Lagersystem für die Lagerung von solartechnischen Energieerzeugungselementen umfassend mindestens ein Ballastierungssystem nach obiger Beschreibung, mindestens ein auf zwei benachbarten Ballastprofilen aufliegendes Ballastierungselement und mindestens vier Lagerböcke mit Aufnahmestrukturen zur Aufnahme von Energieerzeugungselementen. Die Lagerböcke sind in Eckbereichen eines durch die Grundprofile und die Ballastprofile gebildeten Vierecks angeordnet. Das Viereck ist vorzugsweise ein rechtwinkliges Viereck. Vorzugsweise sind jeweils zwei Lagerböcke mit jeweils mindestens einem Grundprofil verbunden. Die Grundprofile sind mit mindestens einer Ballastprofilanordnung verbunden.

Die Ballastprofilanordnung nach der ersten Ausführungsform liegt vorzugsweise zwischen den Lagerböcken. Bei der zweiten Ausführungsform liegen die Lagerböcke vorzugsweise zwischen zwei Profilen.

Vorzugsweise sind zwei Ballastprofilanordnungen vorgesehen, welche jeweils benachbart zu den Lagerböcken liegen.

Bei Verwendung des Ballastierungssystem nach der zweiten Ausführungsform erfolgt die indirekte Verbindung zwischen dem mindestens einen Ballastprofil und dem mindestens einen Grundprofil über einen der genannten Lagerböcke, wobei das mindestens eine Ballastprofil mit dem Befestigungselement zum Lagerbock verbunden ist und wobei das besagte Grundprofil mit dem Lagerbock fest verbunden ist. Das Grundprofil ist vorzugsweise ebenfalls mit einem Befestigungselement mit dem Lagerbock verbunden.

Ein Verbindungselement, insbesondere für ein Ballastierungssystem oder ein Lagersystem nach obiger Beschreibung weist zwei Sicherungsabschnitte auf, welche mit einem Verbindungsabschnitt verbunden sind und jeweils endseitig vom Verbindungsabschnitt abragen. Jeder Sicherungsabschnitt weist mindestens eine Federlasche und eine Anschlagsfläche auf. Die Federlasche ist durch eine Öffnung in einem Ballastprofil hindurchführbar und wird bei der Hindurchführung leicht deformiert. Nach erfolgter Montage ist die Federlasche in Kontakt mit einer unteren Fläche des Ballastprofils bringbar und die Anschlagsfläche ist in Kontakt mit einer oberen Fläche des Ballastprofils bringbar.

Mit anderen Worten gesagt liegt der Verbindungsabschnitt auf der oberen Fläche des Ballastprofils auf. Die obere Fläche wird bevorzugt durch die besagte Auflägefläche bereitgestellt. Der Verbindungsabschnitt überragt somit die Auflagefläche, wobei der Verbindungsabschnitt vorzugsweise nur eine geringe Dicke aufweist.

Vorzugsweise ist die Federlasche über eine feste Lagerlasche mit dem Verbindungsabschnitt verbunden. Die Lagerlasche steht in einem Winkel α winklig geneigt vom Verbindungsabschnitt ab. Der Winkel α ist vorzugsweise grösser als 90°, insbesondere liegt der Winkel α im Bereich von 92 ° bis 115°.

Vorzugsweise sind an jeder Seite des Verbindungsabschnitts zwei feste Lagerlaschen beabstandet zueinander angeordnet, wobei durch den Abstand ein Zwischenraum gebildet wird und wobei die Federlaschen an den Kanten der Lagerlaschen, die dem Zwischenraum zugewandt sind, angeformt sind und wobei die Kante der Lagerlasche, welche dem Zwischenraum abgewandt ist, eine Anschlagskante bereitstellt.

Vorzugsweise ist die Anschlagskante im eingebauten Zustand mit Randbereichen der Öffnung in Kontakt.

Vorzugsweise berühren die zwei Federlaschen einander nicht, derart, dass ein Raumbereich zwischen den beiden Federlaschen bereitgestellt wird, wobei Teile des Grundprofils in den Raumbereich einragen und somit die Verbindung der zweiten Art bereitgestellt wird.

Vorzugsweise kommt das Grundprofil, wenn dieses in den genannten Raumbereich einragt, mit den beiden Federlaschen in Kontakt. Vorzugsweise werden hierdurch die Grundprofile stabilisiert und einem Biegedrillknicken unter Last kann vorgebeugt werden.

Vorzugsweise weist die Federlasche eine Führungskante auf, welche bei der Montage des Verbindungselements mit einem Rand der Öffnung in Kontakt bringbar ist, und über diesen Kontakt wird die Federlasche bei der Montage federnd verformt.

Vorzugsweise weist das Verbindungselement eine Sicherungslasche auf, welche vom Verbindungsabschnitt absteht, wobei die Sicherungslasche gegen die obere Fläche bzw. gegen die Auflagefläche des Ballastprofils verformbar ist und vorzugsweise in Kontakt mit der oberen Fläche bzw. der Auflagefläche des Ballastprofils bringbar ist. Bei der Ballastierung wird die Sicherungslasche gegen die Auflagefläche gedrückt.

Vorzugsweise wird das Verbindungselement durch einen Stanz- und Umformvorgang hergestellt.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Ansicht eines Lagersystems mit einem Ballastierungssystem nach einer ersten Ausführungsform der vorliegenden Erfindung;
- Fig. 2: eine Detailansicht von Figur 1;
- Fig. 3: eine Detailansicht von Figur 1;
- Fig. 4: eine weitere Ansicht der Figur 3 mit Ballastierungselementen;
- Fig. 5: eine Schnittansicht durch das Ballastierungssystem bei einem Verbindungselement;
- Fig. 6: eine Detailansicht der Figur 5;
- Fig. 7: eine weitere Detailansicht der Figuren 5 und 6 von einer anderen Seite;
- Fig. 8: eine perspektivische Ansicht eines Verbindungselements zum Einsatz in einem Ballastierungssystem nach den vorhergehenden Figuren;
- Fig. 9: eine Detailansicht von Teilen des Ballastierungssystems von unten;
- Fig. 10: eine Detailansicht von Teilen des Ballastierungssystems von oben;
- Fig. 11: eine Schnittansicht quer zur Ballastprofilachse des Ballastierungssystems nach den vorhergehenden Figuren;
- Fig. 12: eine Schnittansicht quer zur Grundprofilachse des Ballastierungssystems nach den vorhergehenden Figuren;
- Fig. 13: eine perspektivische Ansicht eines Lagersystems mit einem Ballastierungssystem nach einer zweiten Ausführungsform der vorliegenden Erfindung;
- Fig. 14: eine Detailansicht von Figur 13;
- Fig. 15: eine Detailansicht von Figur 13;
- Fig. 16: eine Schnittansicht quer zur Ballastprofilachse des Ballastierungssystems nach den vorhergehenden Figuren 13 bis 15.

### BESCHREIBUNG BEVORZUGTER AUSFÜHRUNGSFORMEN

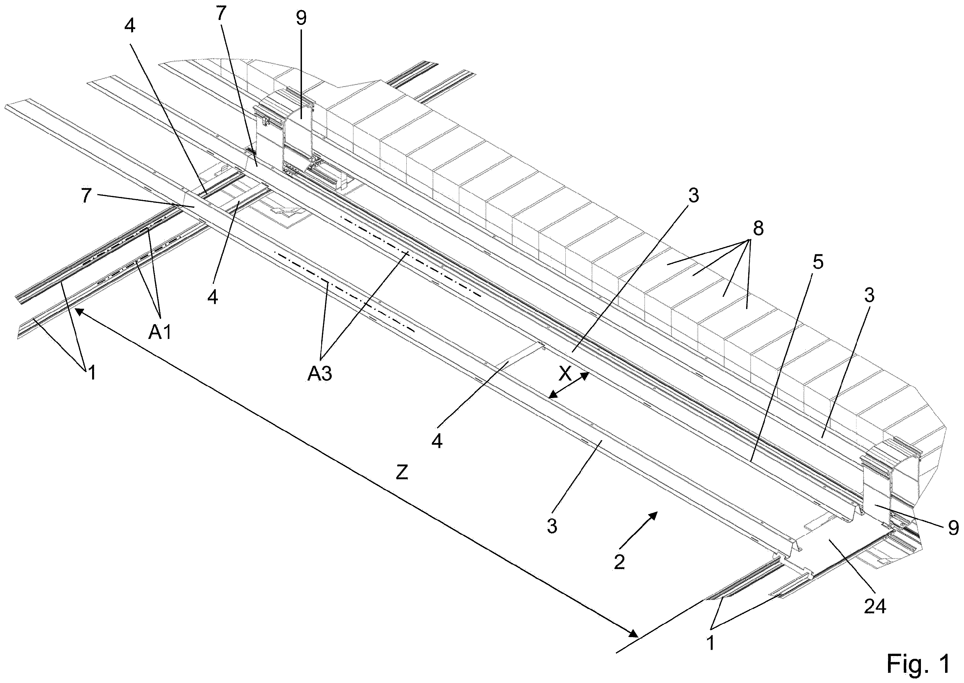

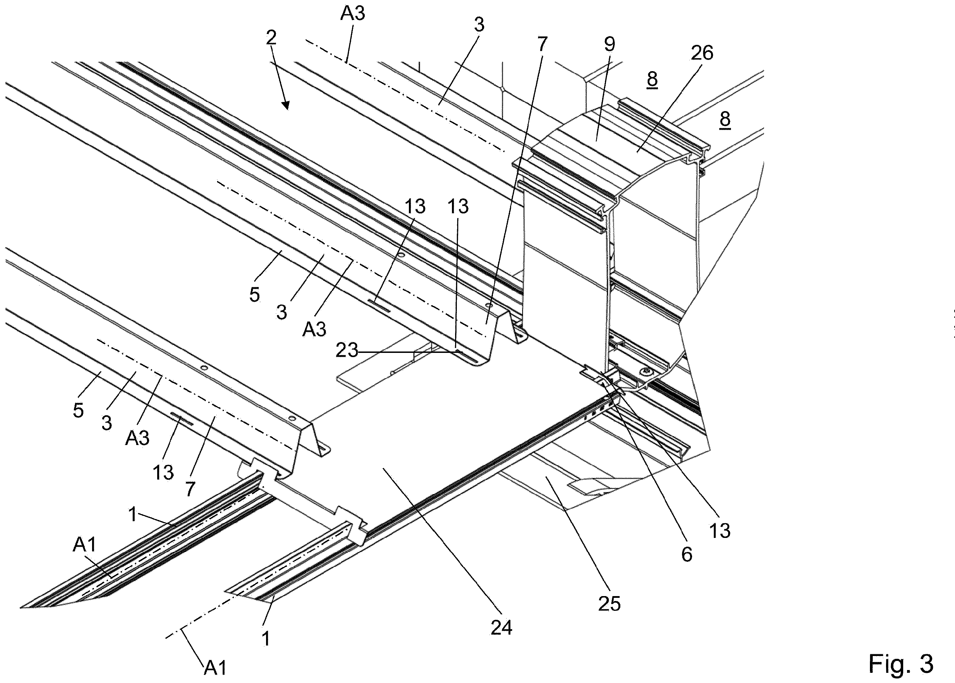

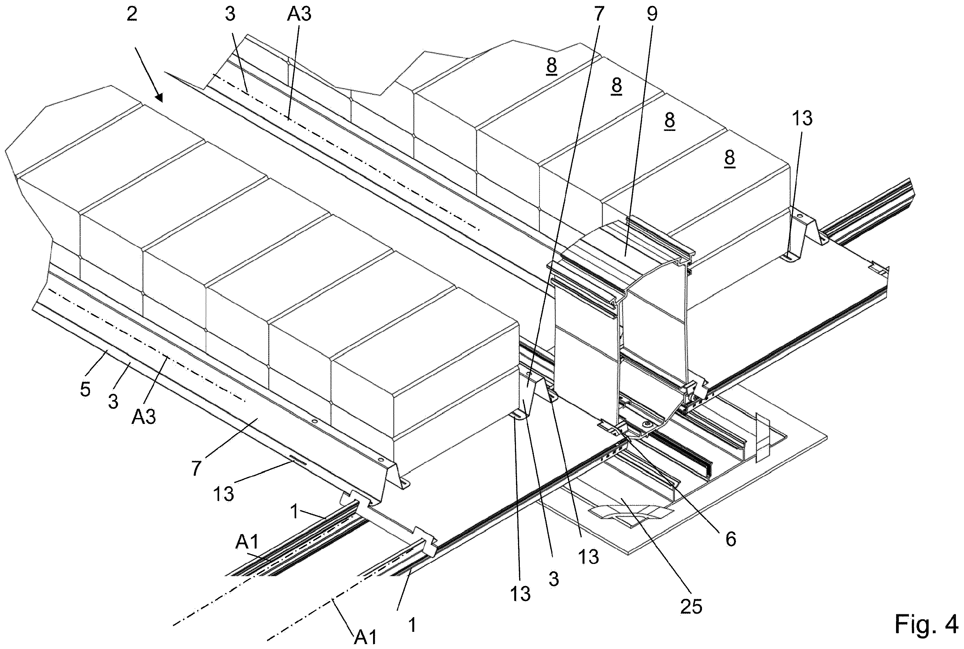

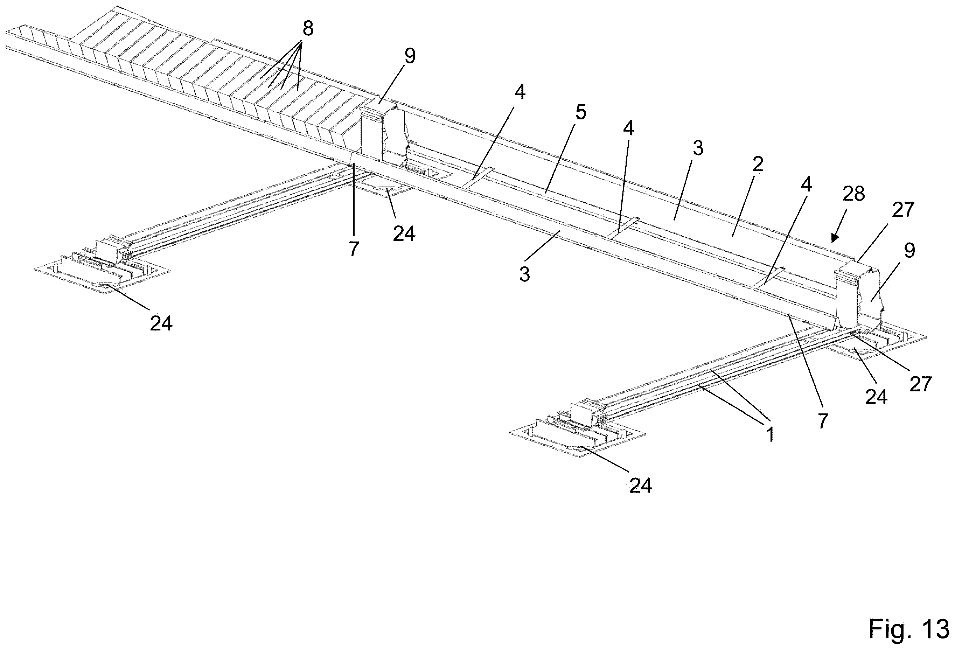

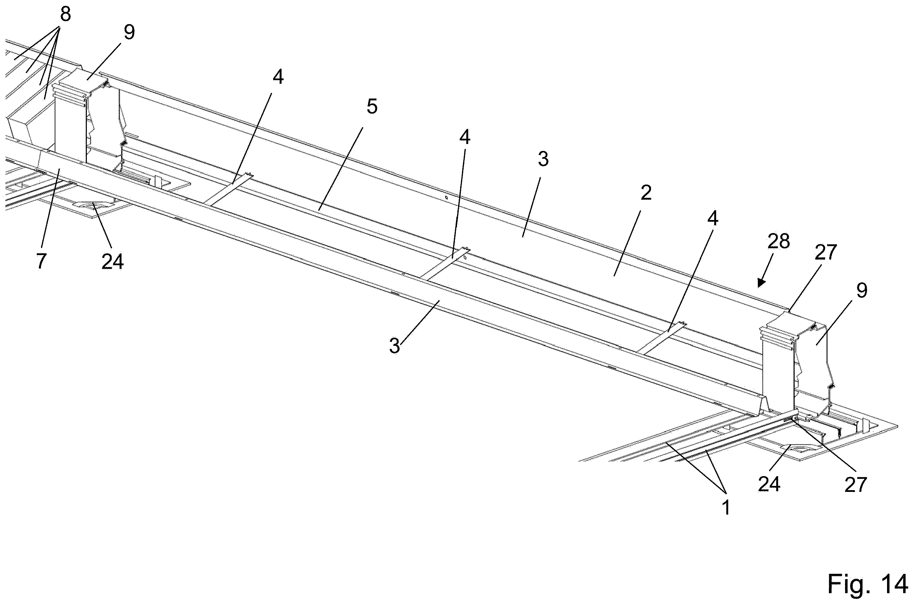

In den Figuren 1 bis 12 wird ein Lagersystem mit einem Ballastierungssystem bzw. Teile davon gemäss einer ersten Ausführungsform gezeigt. In den Figuren 13 bis 16 wird ein Lagersystem mit einem Ballastierungssystem bzw. Teile davon gemäss einer zweiten Ausführungsform gezeigt. Gleiche Teile tragen gleiche Bezugszeichen und es wird auf die Beschreibung untereinander verwiesen.

Das Lagersystem gemäss den gezeigten Ausführungsformen dient der Lagerung von solartechnischen Energieerzeugungselementen. Das Lagersystem kann beispielsweise auf einem Gebäudedach oder einer anderen Fläche aufgestellt werden. Die solartechnischen Energieerzeugungselemente können auf dem Lagersystem platziert werden.

Das Lagersystem gemäss den gezeigten Ausführungsformen umfasst mindestens ein Ballastierungssystem nach der untenstehenden Beschreibung, mindestens ein auf dem Ballastierungssystem B aufliegendes Ballastierungselement 8 und mindestens vier Lagerböcke 9 mit Aufnahmestrukturen zur Aufnahme von Energieerzeugungselementen. Das Ballastierungssystem B steht mit den Lagerböcken in Verbindung und beschwert die Lagerböcke 9. Die Energieerzeugungselemente sind mit den Lagerböcken 9 fest verbunden und werden somit durch die auf dem Ballastierungssystem aufliegenden Ballastierungselemente beschwert. Die Lagerböcke 9 weisen unterseitig einen Auflageabschnitt 25 auf, mit welchem die Lagerböcke 9 auf einem bauseitigen Flächenabschnitt, wie einem Dach, aufliegen. Ferner weisen die Lagerböcke 9 einem sich vom Auflageabschnitt 25 weg erstreckenden Halteabschnitt 26 auf, an welchem die Energieerzeugungselemente befestigt werden.

In der Folge wird nun unter Bezugnahme auf die Figuren 1 bis 12 das Ballastierungssystem B gemäss der ersten Ausführungsform beschrieben. Das Ballastierungssystem B umfasst mindestens ein Grundprofil 1, eine Ballastprofilanordnung mit jeweils zwei Ballastprofilen 3 und mehrere Verbindungselemente 4.

Die Grundprofile 1 erstrecken sich entlang einer Grundprofilachse A1. Die Grundprofile 1 sind jeweils derart angeordnet, dass die Grundprofilachsen A1 und somit auch die Grundprofile 1 selbst parallel zueinander verlaufen. Die Grundprofile 1 liegen in einem Abstand beabstandet zueinander.

Die Ballastprofile 3 erstrecken sich entlang einer Ballastprofilachse A3. Die Ballastprofile 3 sind jeweils derart angeordnet, dass die Ballastprofilachse A3 und somit auch die Ballastprofile 3 zu sich selbst parallel zueinander verlaufen. Die Ballastprofile 3 liegen in einem Abstand beabstandet zueinander. In einer Ballastprofilanordnung 2 liegen zwei Ballastprofile 3 in einem Abstand X zueinander beabstandet.

Die Ballastprofile 3 liegen quer zu den Grundprofile 1. Das heisst, dass die Ballastprofilachsen A3 in einem rechten Winkel zu den Grundprofilachse A1 liegen. Es wird somit ein rechtwinkliges Viereck aus den Grundprofilen 1 und den Ballastprofile 3 gebildet. Andere Winkel sind auch denkbar.

Die beiden Ballastprofile 3 einer Ballastprofilanordnung werden über mindestens eines der genannten Verbindungselemente 4 miteinander verbunden. Vorzugsweise sind mehrere Verbindungselemente 4 zur Verbindung der beiden Ballastprofile 3 angeordnet. Das Verbindungselement 4 ist mit den beiden Ballastprofilen 3 über eine Verbindung einer ersten Art verbunden, derart, dass Ballastprofile 3 bezüglich ihrer Lage zueinander durch das Verbindungselement 4 festgelegt sind. Das heisst das Verbindungselement 4 sorgt dafür, dass die beiden Ballastprofile 3 fest zueinander angeordnet werden.

In beiden gezeigten Ausführungsformen ist mindestens eines der Ballastprofile 3 zu einem der Grundprofile 1 mit einer weiteren Verbindung verbunden, derart, dass das mindestens eine Ballastprofil 3 in eine Richtung parallel zur Ballastprofilachse A3 und quer zur Grundprofilachse A1 zum mindestens einen Grundprofil 1 festgelegt ist.

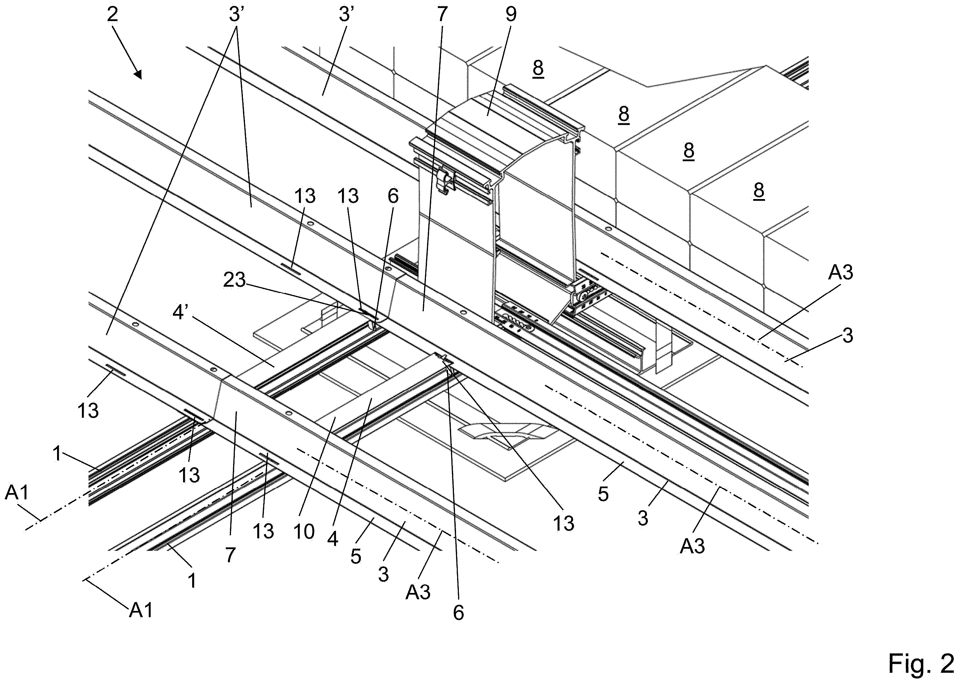

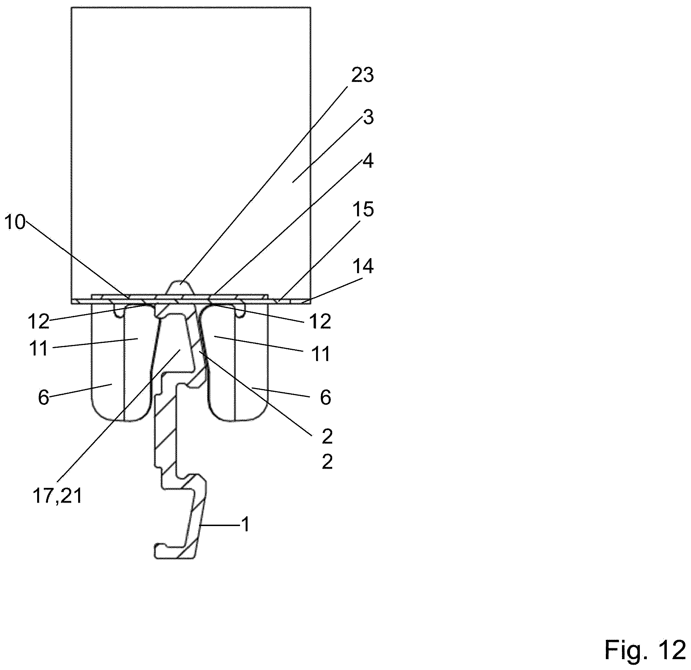

In der **ersten Ausführungsform** ist an mindestens einer Stelle, bei welcher die Ballastprofile 3 auf dem Grundprofil 1 aufliegen, ein weiteres der genannten Verbindungselemente 4 angeordnet. Die genannte weitere Verbindung wird mit diesem Verbindungselement 4 bereitgestellt. Dieses weitere Verbindungselement ist in den Figuren 1 und 2 am linken Ende der beiden Ballastprofile 3 angeordnet. Das besagte weitere Verbindungselement 4 ist mit den beiden Ballastprofilen 3 über die Verbindung der oben genannten ersten Art verbunden. Das heisst derart, dass die Ballastprofile 3 bezüglich ihrer Lage zueinander durch das Verbindungselement 4 festgelegt sind. Weiter sind die beiden Ballastprofile 3 mit dem besagten weiteren Verbindungselement 4 zum Grundprofil 1 mit einer Verbindung einer zweiten Art verbunden. Die Verbindung der zweiten Art ist derart, dass die Ballastprofile 3 mindestens gegen eine Bewegung in Richtung der Ballastprofileachse A3 festgelegt sind. Die Verbindung der zweiten Art zwischen dem Verbindungselement 4 und dem Grundprofil 1 weiterhin derart ist, dass eine Bewegung zwischen dem Verbindungselement 4 und dem Grundprofil 1 in Richtung der Grundprofilachse A1 mindestens gehemmt oder kraftschlüssig festgelegt ist. Diesbezüglich wird auf die Figur 12 verwiesen, wo gezeigt wird, dass Teile des Grundprofils 1 in einem Raumbereich 22 zwischen Federlaschen 11 des Verbindungselements 4 geklemmt werden.

Die Lagerböcke 9 sind in Eckbereichen eines, insbesondere rechtwinkligen, durch die Grundprofile 1 und die Ballastprofile 3 gebildeten Vierecks angeordnet. Jeweils zwei Lagerböcke 9 sind mit jeweils mindestens einem Grundprofil 1 verbunden. Die Grundprofile 1 sind mit mindestens einer Ballastprofilanordnung 2 verbunden.

Das oben beschriebene Ballastierungssystem B wird unter Bezugnahme auf alle Figuren 1 bis 12 genauer erläutert. Das Ballastierungssystem B umfasst mindestens zwei in einem Abstand Z beabstandet zueinander liegende Grundprofile 1, mindestens eine Ballastprofilanordnung 2 mit jeweils zwei in einem Abstand X beabstandet zueinander liegenden Ballastprofilen 3, und mehrere Verbindungselemente 4.

Die Grundprofile 1 erstrecken sich entlang einer Grundprofilachse A1 und die Ballastprofile 3 entlang einer Ballastprofileachse A3. Die Grundprofile 1 und die Ballastprofile 3 liegen so zueinander, dass sich die Grundprofilachsen A1 jeweils winklig geneigt, insbesondere in einem rechten Winkel, zu den Ballastprofileachsen A3 verlaufen.

Mindestens eines der genannten Verbindungselemente 4 ist mit den beiden Ballastprofilen 3 über eine Verbindung der ersten Art verbunden. Die Verbindung der ersten Art ist derart, dass die Ballastprofile 3 bezüglich ihrer Lage zueinander durch das Verbindungselement 4 festgelegt sind. Das heisst, die Verbindung der ersten Art sorgt für eine feste Verbindung zwischen den beiden benachbart zueinander liegenden Ballastprofile 3.

Weiter ist an mindestens einer Stelle, bei welcher die Ballastprofile 3 auf dem Grundprofil 1 aufliegen, ein weiteres der genannten Verbindungselemente 4 angeordnet. Das besagte weitere Verbindungselement 4 ist mit den beiden Ballastprofilen 3 über die Verbindung der genannten ersten Art verbunden, derart, dass Ballastprofile 3 bezüglich ihrer Lage zueinander durch das Verbindungselement 4 festgelegt sind. Weiter werden mit dem besagten weiteren Verbindungselement 4 die Ballastprofile 3 zum Grundprofil 1 mit einer Verbindung der zweiten Art verbunden, derart, dass die Ballastprofile 3 mindestens gegen eine Bewegung in Richtung der Ballastprofileachse A3 zum Grundprofil 1 festgelegt sind.

Die Verbindung der ersten Art ist unterschiedlich zur Verbindung der zweiten Art. Bei der Verbindung der ersten Art werden die miteinander über das Verbindungselement 4 verbunden Teile, hier die beiden Ballastprofile 3, jeweils fest miteinander verbunden. Bei der Verbindung der zweiten Art werden die beiden über das Verbindungselement 4 verbundenen Teile, hier das Ballastprofil 3 mit dem Grundprofil 1, so miteinander verbunden, dass die Bewegung in Richtung der Ballastprofilachse A3 nicht möglich ist und dass eine Bewegung parallel zur Ballastprofilachse A3 und in Richtung der Grundprofilachse A1 mindestens gehemmt oder kraftschlüssig festgelegt ist.

Die besagten Verbindungselemente 4 sind identisch zueinander ausgebildet.

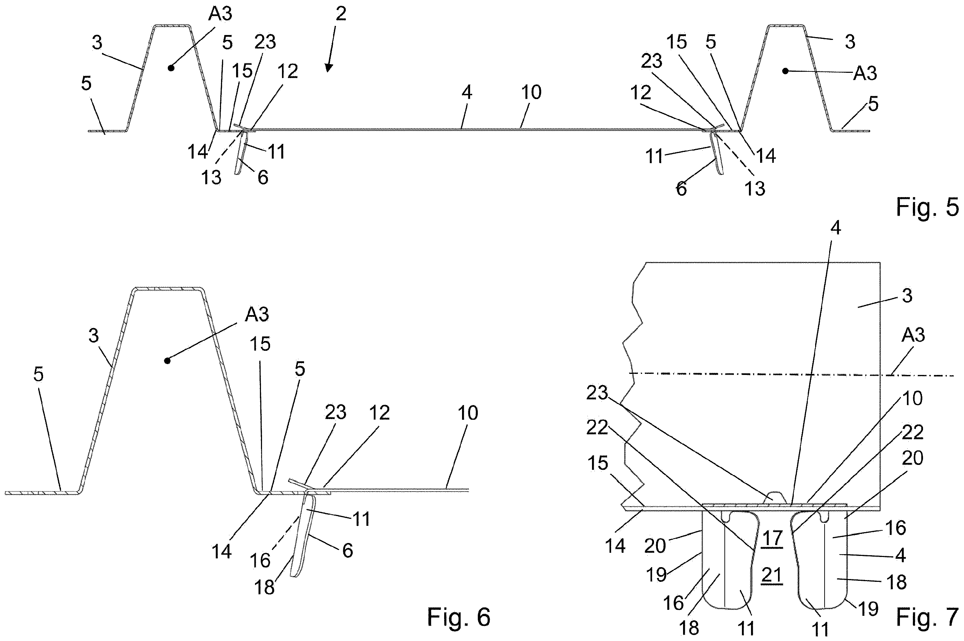

In den Figuren 5 bis 12 wird das Verbindungselement 4 und die Verbindung mit dem Ballastprofil 3 genauer gezeigt.

Das Verbindungselement 4 weist zwei Sicherungsabschnitte 6 auf. Die Sicherungsabschnitte 6 dienen der Verbindung mit den Ballastprofilen 3 bzw. mit den Grundprofilen 1. Die beiden Sicherungsabschnitte 6 sind mit einem Verbindungsabschnitt 10 verbunden und ragen jeweils endseitig vom Verbindungsabschnitt 10 ab. Jeder der Sicherungsabschnitt 6 weist mindestens eine Federlasche 11 und eine Anschlagsfläche 12 auf. In der gezeigten Ausführungsform sind pro Sicherungsabschnitt 6 zwei Federlaschen 11 angeordnet. Die Federlasche 11 ist durch eine Öffnung 13 in einem Ballastprofil 3 hindurchführbar. Bei der Hindurchführung wird die Federlasche 11 leicht deformiert, wobei nach erfolgter Montage die Federlasche 11 in Kontakt mit einer unteren Fläche 14 des Ballastprofils 3 bringbar ist und wobei die Anschlagsfläche 12 in Kontakt mit einer oberen Fläche 15 des Ballastprofils 3 bringbar ist.

Die Federlasche 11 steht über eine feste Lagerlasche 16 mit dem Verbindungsabschnitt 10 in Verbindung. Die Lagerlasche 16 steht in einem Winkel α winklig geneigt vom Verbindungsabschnitt 10 ab. Der Winkel α ist vorzugsweise grösser als 90°, und liegt insbesondere im Bereich von 92° bis 115°.

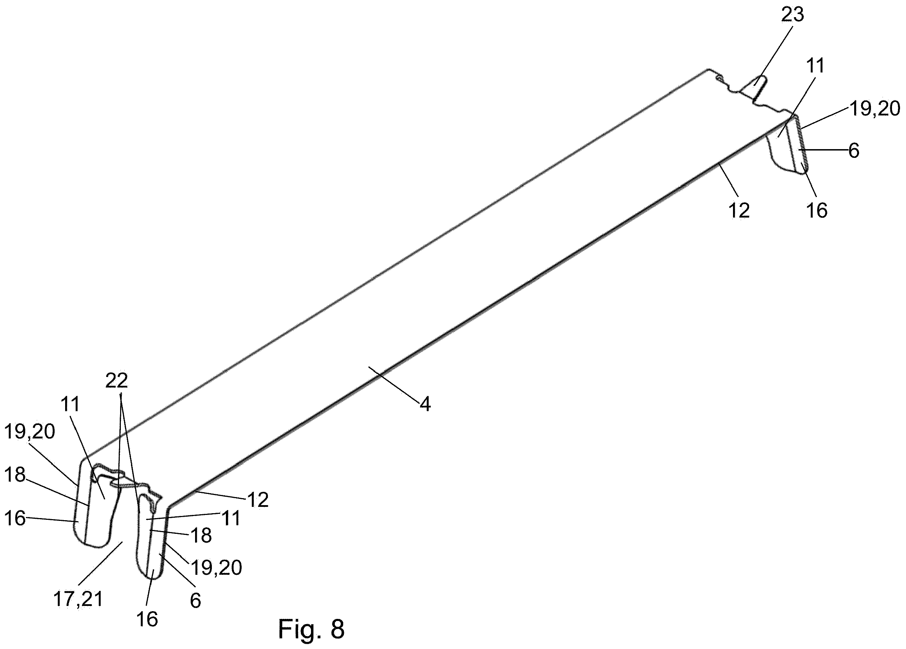

Von der Figur 8 ist ersichtlich, dass auf jeder Seite des Verbindungsabschnitts 10 zwei feste Lagerlaschen 16 beabstandet zueinander angeordnet sind. Die Lagerlaschen 16 ragen dabei randseitig vom Verbindungsabschnitt 10 ab. Durch den Abstand zwischen den beiden Lagerlaschen 16 wird ein Zwischenraum 17 gebildet. Die Federlaschen 11 sind an den Kanten 18 der Lagerlaschen 16, die dem Zwischenraum 17 zugewandt sind, angeformt. Das heisst die Federlaschen 11 ragen in den Zwischenraum 17 ein. Die Kante 19 der Lagerlasche 16, welche dem Zwischenraum 17 abgewandt ist, stellt eine Anschlagskante 20 dar. Die Kante 20 kommt dabei in Kontakt mit den Seitenrändern der Öffnung 13 im Ballastprofil 3.

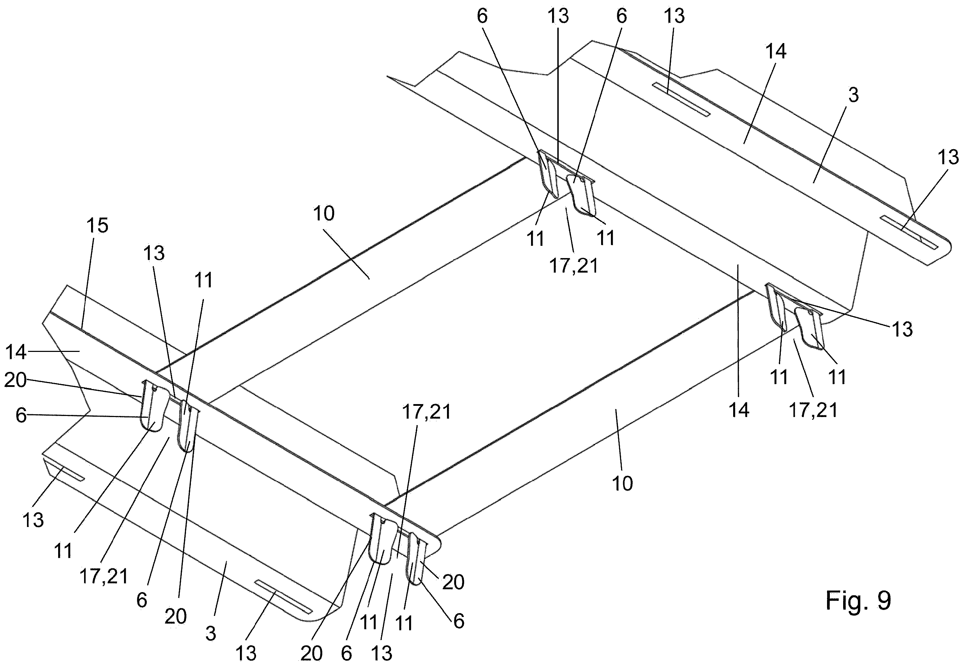

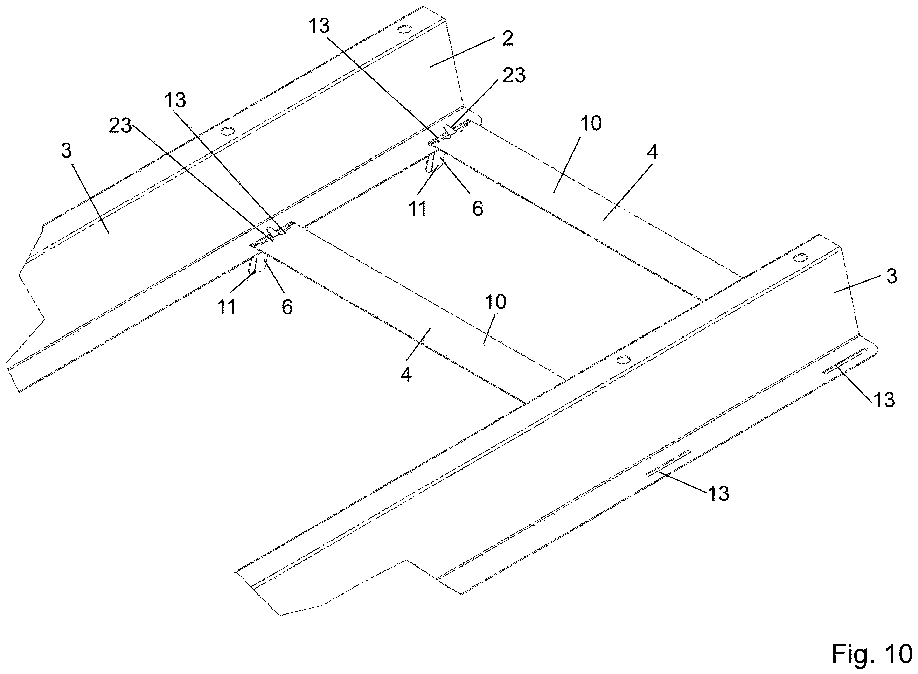

Wie oben erwähnt ist die Verbindung zwischen dem Verbindungselement 4 und dem jeweiligen Ballastprofil 3 fest. Das heisst, dass das Verbindungselement 4 zum Ballastprofil 3 festgelegt ist. In den Figuren 9 und 10 wird gezeigt, dass die Federlasche 11 und die Anschlagsfläche 12 über die untere Fläche 14 und die obere Fläche 15 das Ballastprofil 3 klemmen. Ferner kommen die beiden Anschlagskanten 20 in Kontakt mit dem Rand der Öffnung 13. Das heisst, dass das Verbindungselement 4 zum Ballastprofil 3 in Richtung der Ballastprofilachse A3, in eine Richtung quer zur Ballastprofilachse A3 und rechtwinklig zur Grundprofilachse A1 und in eine Richtung quer zur Ballastprofilachse A3 und parallel zur Grundprofilachse A1 festgelegt ist.

Vorzugsweise berühren die zwei Federlaschen 11 einander nicht, so dass ein Raumbereich 21 zwischen den beiden Federlaschen 11 bereitgestellt wird. Teile des Grundprofils 1 ragen in den Raumbereich 21 ein und somit wird die Verbindung der zweiten Art bereitgestellt. Im montierten Zustand erstreckt sich eine der Federlaschen 11 auf einer Seite des Grundprofils 1 und die andere der Federlaschen 11 erstreckt sich auf der anderen Seite des Grundprofils 1. Die Verbindung zwischen dem Verbindungselement 4 und dem Grundprofil 1 ist demnach derart, dass eine Bewegung zwischen dem Verbindungselement 4 und dem Grundprofil 1 in Richtung der Grundprofilachse A1 gehemmt oder kraftschlüssig festgelegt ist und dass eine Bewegung quer zur Grundprofilachse A1 und in Richtung der Ballastprofilachse A3 verunmöglicht wird.

Weiter weist die Federlasche 11 eine Führungskante 22 aufweist. Die Führungskante 22 ist bei der Montage des Verbindungselements 4 mit einem Rand der Öffnung 13 in Kontakt bringbar. Über diesen Kontakt wird beim Einschieben der Federlasche 11 in die Öffnung 13 die Federlasche 11 federnd verformt.

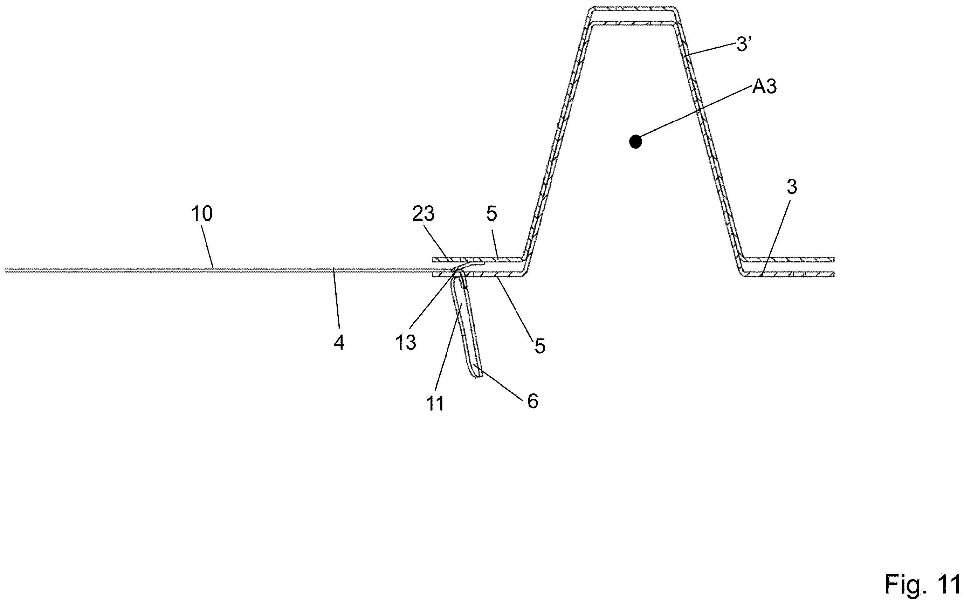

Vorzugsweise weist das Verbindungselement 1 eine Sicherungslasche 23 auf. Die Sicherungslasche 23 ragt vom Verbindungsabschnitt 10 gegenüberliegend zu dem Sicherungsabschnitt 6 ab. Von der Figur 11 ist ersichtlich, dass die Sicherungslasche 23 durch ein weiteres Ballastprofil 4' gegen die Auflagefläche 5 bzw. die obere Fläche 15 gedrückt wird. Gleichermassen wir die Sicherungslasche 23 durch ein darauf aufliegendes Ballastierungselement 8 gegen die Auflagefläche 5 bzw. die obere Fläche 15 gedrückt. Dabei kann die Sicherungslasche 23 gegen die Auflagefläche 5 bzw. die obere Fläche 15 verformt werden oder in Kontakt mit der Auflagefläche 5 bzw. der oberen Fläche 15 gebracht werden.

Von allen Figuren 1 bis 7 und 9 bis 10 ist ersichtlich, dass jedes der Ballastprofile 3 eine Auflagefläche 5 aufweist, auf welcher Ballastierungselemente 8 auflegbar sind. Die Ballastierungselemente 8 sind beispielsweise Betonblöcke oder dergleichen, die auf die Auflagefläche auflegbar sind. Dabei erstrecken sich die Ballastierungselemente 8 über den Zwischenraum zwischen den beiden beabstandet zueinander liegenden Ballastprofile 3.

In der gezeigten Ausführungsform weist jedes der Ballastprofile 3 einen trapezförmigen Querschnitt auf, wobei eine Trapezseite offen ausgebildet ist, wobei beidseitig vom trapezförmigen Querschnitt je eine Auflagefläche 5 abragt. Hier ist die untere Seite des trapezförmigen Querschnitts offen ausgebildet.

Das Ballastprofil 3 weist mehrere von den oben genannten Öffnungen 13 auf. Die Öffnung 13 sind in regelmässigen Abständen zueinander angeordnet. Dabei ragt das Verbindungselement 4 mit einem Sicherungsabschnitt 6 in die jeweilige Öffnung 13 ein, wobei dadurch die Verbindung zwischen dem Ballastprofil 3 und dem Verbindungselement 4 bereitgestellt wird.

Über die Länge eines Ballastprofils sind vorzugsweise mehrere Verbindungselemente 4 angeordnet, die in Richtung der Ballastprofilachse A3 verteilt sind. Der Abstand zwischen zwei Verbindungselementen 4 liegt vorzugsweise im Bereich von 60 bis 140 Zentimetern, insbesondere im Bereich von 50 bis 150 Zentimetern. In den Endbereichen der Ballastprofile 3 ist der Abstand zwischen zwei Verbindungselementen 4 etwas kleiner gewählt. Der Abstand liegt hier vorzugsweise zwischen 9 und 12 Zentimetern, insbesondere zwischen 10 und 11 Zentimetern. Der Abstand zwischen den Ballastprofilachsen A3 von zwei benachbarten Ballastprofilen liegt im Bereich von 17 bis 30 Zentimetern, insbesondere im Bereich von 19.5 bis 27.5 Zentimetern.

Von den Figuren 1 und 2 und in der Schnittdarstellung gemäss Figur 11 wird ersichtlich, dass die Ballastprofile 3 vom Grundprofil 1 mit einem überstehenden Ende abstehen, derart, dass im Bereich der überstehenden Enden 7 der Ballastprofile 3 jeweils ein weiteres Ballastprofil 3' und ein weiteres Grundprofil 1' anordbar ist. Das weitere Ballastprofil 3' liegt auf dem ersten Ballastprofil 3 auf. Die Auflage ist dabei derart, dass eine Bewegung zwischen den beiden Ballastprofile 3, 3' in Richtung der jeweiligen Ballastprofilachse A3 bzw. A3' möglich ist. Es wird demnach ein Loslager bereitgestellt. Die weiteren Ballastprofile 3' werden wiederum mit Verbindungselementen 4 miteinander verbunden.

Gegenüberliegend zu den weiteren Ballastprofilen 3' liegen die Ballastprofile 3 über eine Platte 24 auf den Grundprofilen 1 auf. Hier handelt es sich vorzugsweise um ein Loslager in Richtung der Ballastprofilachse A3, wobei die Ballastprofile 3 sich in Richtung der Ballastprofilachse A3 relativ zum Loslager verschieben können. Gegenüberliegend zum Loslager stehen die beiden Ballastprofile 3 mit dem entsprechenden Grundprofil 1 über das Verbindungselement 4 in Verbindung und bilden ein Festlager.

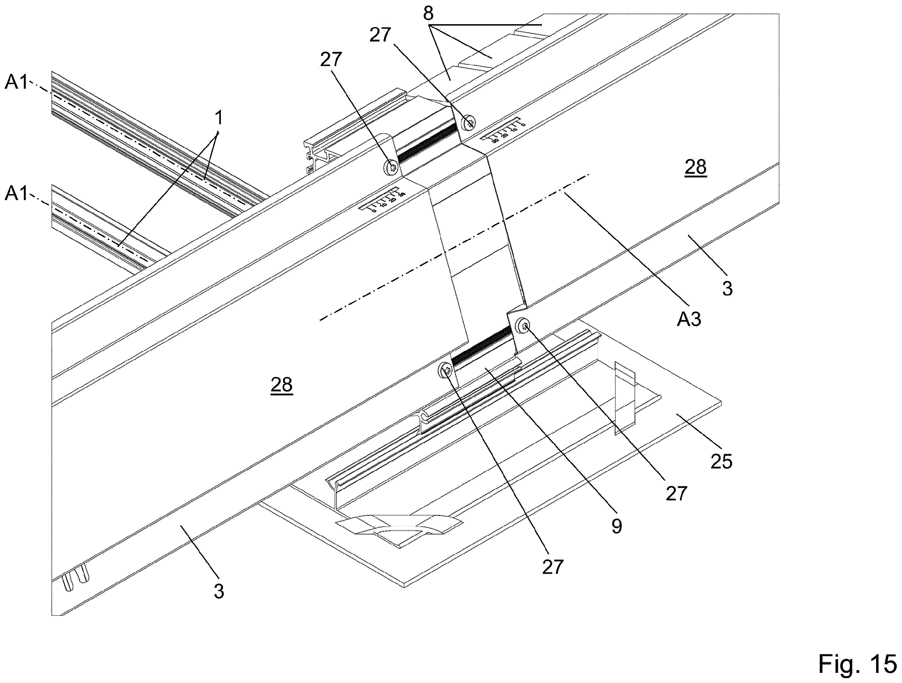

In den Figuren 13 bis 16 wird die **zweite Ausführungsform** gezeigt. Die weitere Verbindung zwischen mindestens einem der Ballastprofile 3 und dem Grundprofil 1 wird indirekt über den Lagerbock 9 durch mindestens ein Befestigungselement 27 bereitgestellt. In der gezeigten Ausführungsform weist das Befestigungselement 27 die Form einer Schraube auf. In der Figur 15 wird gezeigt, dass zwei Befestigungselemente 27 angeordnet sind, mit welchen ein Ballastprofil zum Lagerbock 9 befestigt ist. Weiter ist mindestens eines der Grundprofile 1 mit einem Befestigungselement 27 zum Lagerbock 9 befestigt. Es ist in anderen Ausführungen auch denkbar, dass das Ballastprofil 3 direkt mit dem Grundprofil 1 verbunden ist.

Die beiden Ballastprofile nach der zweiten Ausführungsform sind wiederum mit den oben beschriebenen Verbindungselementen 4 miteinander verbunden. Eines der beiden Ballastprofile ist dabei ebenfalls trapezförmig ausgebildet. Das andere der beiden Ballastprofile weist eine andere Form auf. Nebst der Auflagefläche 5 und den Öffnungen 13, weist das Ballastprofile eine Windabweiserfläche 28 auf. Die Ballastprofile 3 sind in der gezeigten zweiten Ausführungsform derart angeordnet, dass sich der Lagerbock 9 zwischen den beiden Ballastprofile 3 nach oben erstreckt.

Die Auflagefläche 5, auf welcher die Ballastierungselemente 8 aufliegen, verläuft in der gezeigten Ausführungsform winklig geneigt zur Horizontalen.

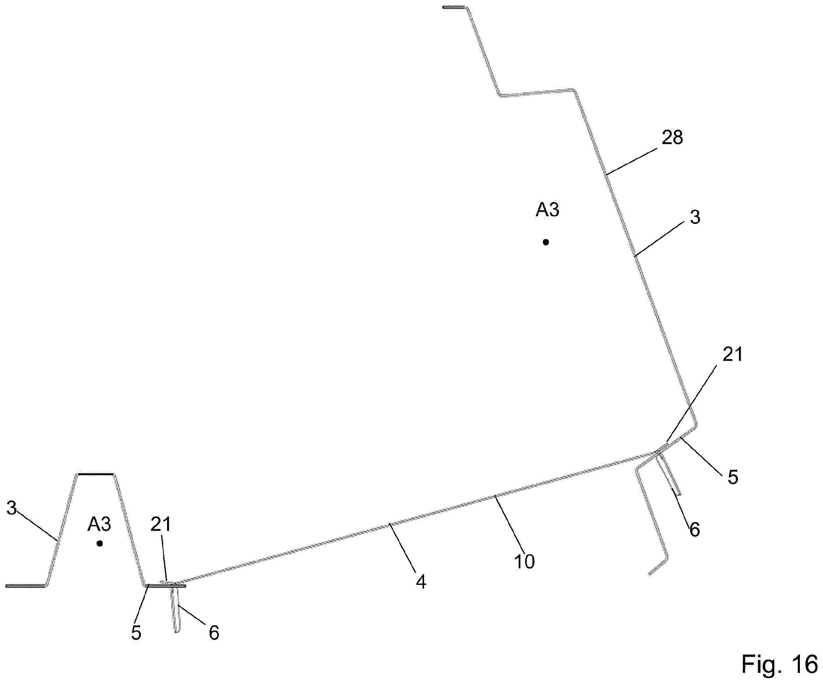

In der Figur 16 wird das Zusammenspiel zwischen dem Verbindungselement 4 und den beiden Ballastprofilen 2 ersichtlich. In dieser Ausführungsform können je nach winkliger Neigung, aufgrund der winklig zur Horizontalen geneigt angeordneten Auflageflächen, die Sicherungslaschen in Kontakt mit der Auflagefläche 5 bzw. mit der oberen Fläche 15 kommen.

### BEZUGSZEICHENLISTE

- 1: Grundprofil
- 2: Ballastprofilanordnung
- 3: Ballastprofile
- 4: Verbindungselement
- 5: Auflagefläche
- 6: Sicherungsabschnitt
- 7: überstehendes Ende
- 8: Ballastierungselement
- 9: Lagerbock
- 10: Verbindungsabschnitt
- 11: Federlasche
- 12: Anschlagsfläche
- 13: Öffnung
- 14: untere Fläche
- 15: obere Fläche
- 16: feste Lagerlasche
- 17: Zwischenraum
- 18: Kante
- 19: Kante
- 20: Anschlagskante
- 21: Raumbereich
- 22: Führungskante
- 23: Sicherungslasche
- 24: Platte
- 25: Auflageabschnitt
- 26: Halteabschnitt
- 27: Befestigungselement
- 28: Windabweiserfläche
- A1: Grundprofilachse
- A3: Ballastprofilachse
- Z: Abstand
- X: Abstand

## Patentansprüche

1. Ballastierungssystem (B) für ein Lagersystem für die Bereitstellung einer Ballastierung von solartechnischen Energieerzeugungselementen, umfassend,
mindestens zwei in einem Abstand (Z) beabstandet zueinander liegende Grundprofile (1),
mindestens eine Ballastprofilanordnung (2) mit jeweils zwei in einem Abstand (X) beabstandet zueinander liegenden Ballastprofilen (3), und
mehrere Verbindungselemente (4),
wobei sich die Grundprofile (1) entlang einer Grundprofilachse (A1) und die Ballastprofile (3) entlang einer Ballastprofileachse (A3) erstrecken, wobei die Grundprofilachsen (A1) jeweils winklig geneigt, insbesondere in einem rechten Winkel, zu den Ballastprofileachsen (A3) verlaufen,
**dadurch gekennzeichnet,**
**dass** mindestens eines der genannten Verbindungselemente (4) mit den beiden Ballastprofilen (3) über eine Verbindung einer ersten Art verbunden ist, derart, dass die Ballastprofile (3) bezüglich ihrer Lage zueinander durch das Verbindungselement (4) festgelegt sind, und
**dass** mindestens eines der Ballastprofile (2) zu einem der Grundprofile (1) mit einer weiteren Verbindung verbunden ist, derart, dass das mindestens eine Ballastprofil (2) in eine Richtung parallel zur Ballastprofilachse (A3) und vorzugsweise in eine Richtung quer zur Grundprofilachse (A1) zum mindestens einen Grundprofil (1) festgelegt ist.

2. Ballastierungssystem (B) nach Anspruch 1, **dadurch gekennzeichnet, dass** die weitere Verbindung durch ein weiteres der genannten Verbindungselemente (4) bereitgestellt wird,
wobei das weitere Verbindungselement (4) an mindestens einer Stelle, bei welcher die Ballastprofile (3) auf dem Grundprofil (1) aufliegen, angeordnet ist, und
wobei mit dem besagten weiteren Verbindungselement (4) die Ballastprofile (3) zum Grundprofil (1) mit einer Verbindung einer zweiten Art verbunden sind, derart, dass die Ballastprofile (3) mindestens gegen eine Bewegung in Richtung der Ballastprofileachse (A3) zum Grundprofil (1) festgelegt sind.

3. Ballastierungssystem (1) nach Anspruch 2, **dadurch gekennzeichnet,**
**dass** die Verbindung der zweiten Art zwischen dem Verbindungselement (4) und dem Grundprofil (1) weiterhin derart ist, dass eine Bewegung zwischen dem Verbindungselement (4) und dem Grundprofil (1) in Richtung der Grundprofilachse (A1) mindestens gehemmt oder kraftschlüssig festgelegt ist.

4. Ballastierungssystem (1) nach einem der vorhergehenden Ansprüche, **dadurch gekennzeichnet, dass** die besagten Verbindungselemente (4) identisch zueinander ausgebildet sind.

5. Ballastierungssystem nach Anspruch 1, **dadurch gekennzeichnet, dass** die weitere Verbindung durch mindestens ein Befestigungselement (27), wie eine Schraube oder eine Niete, bereitgestellt wird, wobei das genannte mindestens eine Ballastprofil (3) durch das Befestigungselement (27) direkt oder indirekt mit dem Grundprofil (1) verbunden wird.

6. Ballastierungssystem (1) nach einem der vorhergehenden Ansprüche, **dadurch gekennzeichnet, dass** die Verbindung zwischen dem Verbindungselement (4) und dem jeweiligen Ballastprofil (3) fest ist, so dass das Verbindungselement (4) zum Ballastprofil (3) festgelegt ist, insbesondere, dass das Verbindungselement (4) zum Ballastprofil (3) in Richtung der Ballastprofilachse (A3), in eine Richtung quer zur Ballastprofilachse (A3) und rechtwinklig zur Grundprofilachse (A1) und in eine Richtung quer zur Ballastprofilachse (A3) und parallel zur Grundprofilachse (A1) festgelegt ist,

7. Ballastierungssystem (1) nach einem der vorhergehenden Ansprüche, **dadurch gekennzeichnet, dass** jedes der Ballastprofile (3) eine Auflagefläche (5) aufweist, auf welcher Ballastierungselemente (8) auflegbar sind.

8. Ballastierungssystem (1) nach Anspruch 7, **dadurch gekennzeichnet, dass** jedes der oder mindestens eines der Ballastprofile (3) einen trapezförmigen Querschnitt aufweist, wobei eine Trapezseite offen ausgebildet ist, wobei beidseitig vom trapezförmigen Querschnitt je eine Auflagefläche (5) abragt.

9. Ballastierungssystem (1) einem der vorhergehenden Ansprüche, **dadurch gekennzeichnet,**
**dass** das Ballastprofil (3) mehrere Öffnungen (13) aufweist, in welche das Verbindungselement (4) mit einem Sicherungsabschnitt (6) einragt, wobei dadurch die Verbindung zwischen dem Ballastprofil (3) und dem Verbindungselement (4) bereitgestellt wird.

10. Ballastierungssystem nach einem der vorhergehenden Ansprüche, **dadurch gekennzeichnet,**
**dass** in Richtung der Ballastprofilachse (A3) der Abstand zwischen zwei Verbindungselementen (4) im Bereich von 50 bis 150 Zentimetern, insbesondere im Bereich von 60 bis 140 Zentimetern, liegt; wobei in den Endbereichen der Ballastprofile (3) der Abstand zwischen zwei Verbindungselementen (4) vorzugsweise zwischen 9 und 12 Zentimetern, insbesondere zwischen 10 und 11 Zentimetern, liegt, und/oder
**dass** der Abstand zwischen den Ballastprofilachsen (A3) von zwei benachbarten Ballastprofilen im Bereich von 17 bis 30 Zentimetern, insbesondere im Bereich von 19.5 bis 27.5 Zentimetern, liegt.

11. Ballastierungssystem nach einem der vorhergehenden Ansprüche, **dadurch gekennzeichnet, dass** die Ballastprofile (3) vom Grundprofil (1) mit einem überstehenden Ende (7) abstehen, derart, dass im Bereich der überstehenden Enden (7) der Ballastprofile (3) ein weiteres Ballastprofil (3') und ein weiteres Grundprofil (1') anordbar ist, wobei das weitere Ballastprofil (3') auf dem Ballastprofil (3) aufliegt.

12. Lagersystem für die Lagerung von solartechnischen Energieerzeugungselementen umfassend mindestens ein Ballastierungssystem (B) nach einem der vorhergehenden Ansprüche, mindestens ein auf zwei benachbarten Ballastprofilen (3) aufliegendes Ballastierungselement (8) und mindestens vier Lagerböcke (9) mit Aufnahmestrukturen zur Aufnahme von Energieerzeugungselementen,
wobei die Lagerböcke (9) in Eckbereichen eines, insbesondere rechtwinkligen, durch die Grundprofile (1) und die Ballastprofile (3) gebildeten Vierecks angeordnet sind und
wobei jeweils zwei Lagerböcke (9) mit jeweils mindestens einem Grundprofil (1) verbunden sind, und wobei die Grundprofile (1) mit mindestens einer Ballastprofilanordnung (2) verbunden sind.

13. Lagersystem nach Anspruch 12 mit einem Ballastierungssystem (B) nach Anspruch 4, **dadurch gekennzeichnet, dass** die indirekte Verbindung zwischen dem mindestens einen Ballastprofil (3) und dem mindestens einen Grundprofil (1) über einen der genannten Lagerböcke (9) erfolgt, wobei das mindestens eine Ballastprofil (3) mit dem Befestigungselement (27) zum Lagerbock (9) verbunden ist und wobei das besagte Grundprofil (1) mit dem Lagerbock fest verbunden ist.

14. Verbindungselement (4), insbesondere für ein Ballastierungssystem oder ein Lagersystem nach einem der vorhergehenden Ansprüche, **dadurch gekennzeichnet,**
**dass** das Verbindungselement (4) zwei Sicherungsabschnitte (6) aufweist, welche mit einem Verbindungsabschnitt (10) verbunden sind und jeweils endseitig vom Verbindungsabschnitt (10) abragen,
wobei jeder Sicherungsabschnitt (6) mindestens eine Federlasche (11) und eine Anschlagsfläche (12) aufweist, wobei die Federlasche (11) durch eine Öffnung (13) in einem Ballastprofil (3) hindurchführbar ist und bei der Hindurchführung leicht deformiert wird, wobei nach erfolgter Montage die Federlasche (11) in Kontakt mit einer unteren Fläche (14) des Ballastprofils (3) bringbar ist und wobei die Anschlagsfläche (12) in Kontakt mit einer oberen Fläche (15) des Ballastprofils (3) bringbar ist.

15. Verbindungselement (6) nach Anspruch 14, **dadurch gekennzeichnet, dass** die Federlasche (11) über eine feste Lagerlasche (16) mit dem Verbindungsabschnitt (10) verbunden ist, wobei die Lagerlasche (16) in einem Winkel (α) winklig geneigt vom Verbindungsabschnitt (10) absteht, wobei der Winkel (α) vorzugsweise grösser als 90°, insbesondere im Bereich von 92° bis 115° liegt.

16. Verbindungselement nach Anspruch 15, **dadurch gekennzeichnet, dass** auf jeder Seite des Verbindungsabschnitts (10) zwei feste Lagerlaschen (16) beabstandet zueinander angeordnet sind, wobei durch den Abstand ein Zwischenraum (17) gebildet wird und wobei Federlaschen (11) an den Kanten (18) der Lagerlaschen (16), die dem Zwischenraum (17) zugewandt sind, angeformt sind und dass die Kante (19) der Lagerlasche (16), welche dem Zwischenraum (17) abgewandt ist, eine Anschlagskante (20) bereitstellt.

17. Verbindungselement nach Anspruch 16, **dadurch gekennzeichnet, dass** die zwei Federlaschen (11) einander nicht berühren, derart, dass ein Raumbereich (21) zwischen den beiden Federlaschen (11) bereitgestellt wird, wobei Teile des Grundprofils (1) in den Raumbereich (21) einragen und somit die Verbindung der zweiten Art bereitgestellt wird.

18. Verbindungselement nach einem der vorhergehenden Ansprüche 14 bis 17, **dadurch gekennzeichnet, dass** die Federlasche (11) eine Führungskante (22) aufweist, welche bei der Montage des Verbindungselements (4) mit einem Rand der Öffnung (13) in Kontakt bringbar ist, und wobei über diesen Kontakt die Federlasche (11) bei der Montage federnd verformt wird.

19. Verbindungselement nach einem der vorhergehenden Ansprüche, **dadurch gekennzeichnet, dass** das Verbindungselement (4) eine Sicherungslasche (23) aufweist, welche vom Verbindungsabschnitt (10) absteht, wobei die Sicherungslasche (23) gegen die obere Fläche (15) des Ballastprofils (3) verformbar ist und vorzugsweise in Kontakt mit der oberen Fläche (15) des Ballastprofils (3) bringbar ist.
